# EUROPEAN PATENT APPLICATION

(11) **EP 0 744 450 A2**
(43) Date of publication of application: **27.11.1996**
(21) Application number: 96303341.0
(22) Date of filing: 13.05.1996
(51) Int. Cl.: C09D 133/14, C09D 5/02

(54) **Aqueous compositions containing acetoacetate functional polymer and multifunctional amine**

(30) Priority: 24.05.1995 JP 148413/95
(71) Applicant: ROHM AND HAAS COMPANY, Philadelphia, Pennsylvania 19106-2399 (US)
(72) Inventor: Sugiyama, Takayuki, Saitama (JP); Shibata, Tomohiro, Omiya City, Saitama (JP)
(74) Representative: Angell, David Whilton

(57) **Abstract**

To provide novel aqueous coating compositions that offer excellent film forming properties, solvent resistance, especially resistance to water and alkalis, and tight adhesion.

An aqueous coating composition containing acetoacetate functional polymers having acetoacetate functional groups and acid functional groups, and having a weight-averaged molecular weight of 100,000 or greater, and multifunctional amine.

## Description

### Details of the Invention

### Area of Industrial Utility

This invention concerns aqueous coating compositions that contain high molecular weight polymers having acetoacetate functional groups and acidic functional groups, and, multifunctional amines.

The polymers having acetoacetate functional groups known to the prior art had a molecular weight of about 20,000. While these polymers had good film-forming properties, they were flawed by poor resistance to solvents and alkalis. Divinyl type of crosslinkers have been used to improve solvent resistance, and increasing the molecular weight has been evaluated as well. While these methods do improve solvent resistance, film forming properties and water resistance both deteriorate, and no way has been found to prepare products using these methods that would stand up to practical applications.

### Problems To Be Resolved by this Invention

The objective of the present invention is to provide aqueous polymer compositions that have excellent resistance to solvents, water and alkalis, that provide excellent adhesion properties, and which are storable and have good film forming properties.

### Means Used To Resolve Problems

The present invention provides aqueous coating compositions that include an acetoacetate functional polymer having acetoacetate functional groups and acid functional groups, a weight- averaged molecular weight of 100,000 or greater, and multifunctional amines. This composition may be used to prepare paint compositions having the desired properties, and the resulting paints will exhibit excellent resistance to solvents, water and alkalis, as well as tight adhesion.

What is meant in this invention by using an acetoacetate functional polymer is a vinyl polymer having pendant acetoacetate groups. For purposes of this specification, the term "pendant" shall mean a side group that "is attached to the main polymer chain, and which functions in the reaction." The meaning of "pendant" is not the strict sense which would exclude the this type of group from being joined at the end of the polymer chain. Accordingly, as described in U.S. Patent 4,960,924, polymers which have the acetoacetate functional group introduced by an acetoacetate functional mercaptan would also be usable in this invention. In general, a pendant acetoacetate group is one which is joined to the main polymer chain by the valence 2 organic group R¹ or by the valence 3 organic group R² as shown by the following formulas:

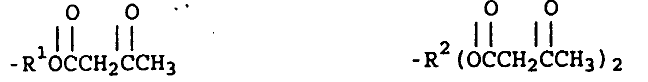

Acetoacetate functional polymers may be prepared by means known to the art. One preferred method involves the polymerization of monomers that include acetoacetate functional monomers. For convenience, one preferred monomer, the acetoacetoxy ethylmethacrylate shown below, will be referred to in this specification as "AAEM."

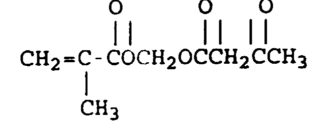

Examples of other monomers that are useful for introducing acetoacetate functional groups include acetoacetoxy ethylacrylate, acetoacetoxy propylmethacrylate, allylacetoacetate, acetoacetoxy butylmethacrylate, 2,3-di(acetoacetoxy) propyl methacrylate, etc. In general, it is possible to convert polymerizable hydroxy functional monomers into acetoacetates using diketone or other suitable acetoacetyl converting agent [For example, see Witzeman, J.S., Dell Nottingham, w., Dell Rector, F. J.: "Coating Technology," Vol. 62, p. 101 (1990) Comparison of Methods for the Preparation of Acetoacetylated Coating Resins as well as the other citations in its bibliography].

In most cases the acetoacetate functional polymer used in this invention will be a copolymer comprised of an acetoacetate functional monomer and other monomer. Examples of useful co-monomers include: olefins such as ethylene, alkyl acrylates and methacrylates having alkyl groups with 1 to 20 carbon atoms (preferably 1 to 8 carbon atoms), vinyl acetate, acrylic acid, methacrylic acid, acrylonitrile, styrene, isobornyl methacrylate, acrylamide, hydroxyethylacrylate and methacrylate, hydroxypropyl methacrylate and acrylate, N-vinyl pyrrolidone, butadiene, isoprene, vinyl chloride, vinylidene chloride and other such halogenated vinyl compounds, alkyl maleate, alkyl fumarate, fumaric acid, maleic acid, itaconic acid, etc. It is also possible to include low levels of divinyl monomers or polyvinyl monomers, for example glycol polyacrylate, allyl methacrylate, divinyl benzene, etc. ; and in controlled amounts, it is also possible to gel the latex particles, which is desirable in some cases. However, it is important that when making such additions, that care is taken that they not dramatically alter the properties of the film.

The acetoacetate functional polymers used in this invention contain both the acetoacetate functional group and the acid functional group in a single polymer chain. 0.5 to 30% by weight, preferably 1 to 20% by weight, of the acetoacetate functional monomer , and 0.5 to 10% by weight, preferably 1 to 5% by weight, of the acid functional monomer should be included per total weight of the polymer. The foregoing amounts of acid should produce acid values ranging from 0.5 to 70, preferably from 3 to 35.

The preferred monomers having acid functional groups are acrylic acid, methacrylic acid, itaconic acid, etc.

The weight-averaged molecular weight of the acetoacetate functional polymer should be 100,000 or greater, preferably 200,000 or greater. Should its weight-averaged molecular weight be less than 100,000, it will not be possible to obtain good solvent, water and alkali resistance.

While it is possible to measure this molecular weight according to any of the various methods known to the art, the molecular weights mentioned in this specification were measured by gel permeation chromatography.

In general, the acetoacetate functional polymers used in this invention may be prepared by using a free radical initiator with appropriate heating; which produces polymers by free radical initiated polymerization in an aqueous dispersion or as an emulsion polymer. Since the polymer must have film-forming properties, useful emulsion polymers would generally have to have a glass transition temperature under 60°C. Such polymers, in conjunction with film forming adjuncts, will form high quality films at ambient temperatures.

Even if the polymer has a higher glass transition temperature, however, it can be blended with a compatible polymer and still be used as a film forming polymer.

In a specific form of this invention, the polymer is prepared in an aqueous medium, especially by using aqueous emulsion polymerization. One may use the conventional dispersing agents during this polymerization, for example, alkali metal salts or ammonium salts of alkyl sulfates, alkyl sulfonic acid or fatty acids, oxyethylated phenols or other cationic surfactants and/or nonionic type emulsifiers. The preferred surfactants are the cationic surfactants such as alkyl sulfonate ester salts or polyoxyethylene alkyl sulfonate ester salts, for example, sodium lauryl sulfate, triethanolamine lauryl sulfate, ammonium lauryl sulfate, sodium dodecylbenzene sulfonate, sodium alkyl naphthalene sulfonate, sodium polyoxyethylene alkyl ester sulfonate, triethanolamine polyoxyethylene alkyl ether sulfonate, sodium polyoxyethylene alkyl phenol ether sulfonate, etc. The dispersing agents are used in conventional amounts, 0.1 to 6% by weight per the total weight of monomers.

Either the heat initiation method or the redox initiation method may be used to initiate polymerization. The conventional free radical type initiators (such as hydrogen peroxide, t-butylhydroperoxide, ammonium persulfate and/or alkali metal salts) may be used. The typical amount would range from 0.05 to 3.0% by weight per total weight of monomers. It is further possible to use the same levels of redox type initiators by using the same initiators in conjunction with a suitable reductant (such as isoascorbinic acid, sodium hydrogensulfite).

It is preferable to perform the polymerization in the presence of a buffering agent. Sodium carbonate, sodium hydrogen carbonate, ammonium carbonate, or ammonium hydrogen carbonate may be used as buffering agents.

Low levels of mercaptans (for example 0.05 to 6% by weight per total weight of monomers of n-octyl mercaptan, n-dodecyl mercaptan, mercapto butyl propionate, mercapto methyl propionate, or mercapto propionic acid) may be used as chain moving agents to prevent the formation of significant percentages of gels or to control the molecular weight.

The acetoacetate functional polymers used in this invention may be solvent-soluble or water-soluble polymers. When such kinds of polymers are needed, in general, they would be prepared by adding a water soluble monomer mixture or by adding isopropanol, butyl Cellosolve, propylene glycol or other such polymerization solvent to directly prepare the polymers in an aqueous solution. In this case, water can either be added to the polymerization mixture, or it can be added later, after the polymerization has been completed. In certain cases, the polymer can be prepared in a conventional organic solvent such as xylene or toluene. Whether prepared in an organic solvent and water, or without using water, it is desirable that a soluble organic free radical initiator such as azo-bis-isobutyronitrile, t-butyl-peroctoate, or benzoyl peroxide be used. When all of these measures are implemented, the copolymerization will proceed more smoothly if heating is also employed. Another route for preparing the water soluble polymers of this invention is to render the resulting emulsion polymer soluble by the addition of ammonia or other base after preparation, to prepare vinyl polymers whenever polymerizable monomers such as acrylic acid or methacrylic acid have been included (normally at the rate of 50% or more). This type of water soluble polymer can be used as a dispersion polymer, and preferably, it may be blended with the polymer having the pendent acetoacetate functional group. If this type of system is exposed to a free radical flux, it will form a completely hardened matrix. Blends with alkali soluble resins and latex polymers produce combinations that have particularly advantageous properties in the area of luster and rheology, and are suited to painting and printing applications.

In another form of this invention, there are aqueous dispersions of at least two types of mutually incompatible copolymers that comprise the copolymer particles. It is possible to have the following configurations for the mutually incompatible polymers, for example, core/shell particles, core/shell particles in which the outer shell phase does not completely seal the core, core/shell particles having a plurality of cores per shell, or networks of particles into which each type has been inserted. In all of the above forms of particles, at least one type of the particles occupies more than half of the surface area of the particles, and at least one type occupies the majority of the inner phase. It is possible to measure the two types of mutually incompatible polymers in the composition using technology that is known to the art. Examples of such methods include dying methods that bring out differences in appearance that can be seen under scanning electron microscopes.

The emulsion polymerization technology that is used to prepare the foregoing dispersion solutions is known to the art. There are times when it is advantageous to add low levels of cross- linking monomers, for example allyl methacrylate, and use successive polymerization methods to produce a type of cross-linked structure for the cores, or, to introduce a gel structure. Low levels of core cross-linking do not affect film forming properties, and in certain cases, especially when the pendant acetoacetate is concentrated in the shell, it helps in producing a better paint.

As stated above, the primary application for this technology is the curing of vinyl polymers that have been dispersed or dissolved in an aqueous solution. Unfortunately, in water, vinyl polymers that contain pendant acetoacetate are prone to hydrolysis, especially when heat cured. Such hydrolysis occurs throughout almost the entire pH range, and acetoacetate is generated according to the following equation, and then it is broken down into acetone and carbon dioxide:

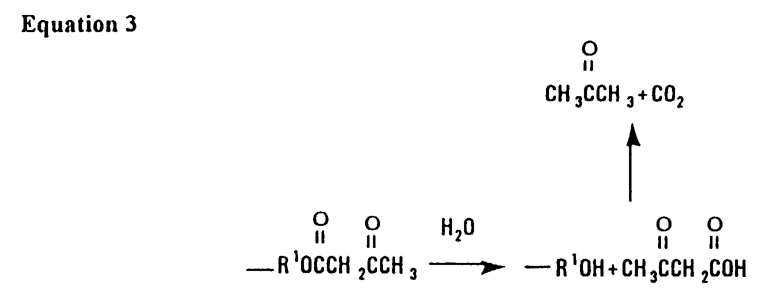

This problem can be eliminated by treating the aqueous acetoacetate polymer after preparation or neutralization with 1 mole equivalent of ammonia or a primary or secondary amine, for example, with ethanol amine, methyl amine, isopropyl amine, diethyl amine or diethanol amine. To wit, typically, the polymer would adjusted to an alkaline pH, preferably pH 9 or greater, and then, the foregoing 1 mole equivalent of ammonia or primary amine would be added to facilitate enamine formation. Enamines are formed under these conditions. This enamine formation reaction is generally very rapid, and the formation speed increases with increasing temperatures. In general, the enamine formation can be completed within 24 hours. An additional method is to raise the system pH to about 9, and then, with the system in equilibrium, readjust the pH to about 9 to account for the consumption of the amines in the enamine formation. Enamines are stable with respect to hydrolysis. The foregoing enamine formation reaction is as follows.

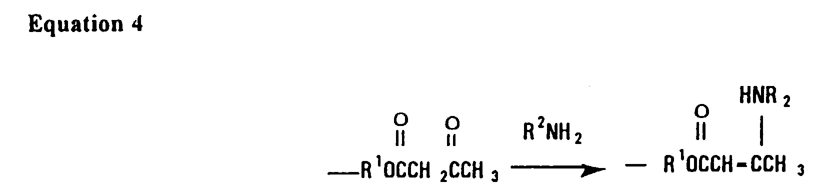

It is best to use at least an equivalent amount of ammonia or amine per the amount of acetoacetate in the polymer. The use of primary amines having a steric hinderence, such as t-butyl amine or aromatic amines such as aniline, is not appropriate since the enamine formation will not be complete. Since the enamine formation reaction is reversible, when the ammonia or the amine evaporates from the film upon exposure to the atmosphere, pendant acetoacetate will be regenerated. However, with a wet composition, so long as it is stored in a manner so as not to permit the amine/ammonia from evaporating (such as in a tightly sealed container), it will exhibit very good storage stability. The curing of such films is generally hindered by the presence of the ammonia or the amine that will evaporate.

Another method for preparing vinyl polymers that have the same sort of pendant enamine functional group would be to derive them from an appropriate amine and acetoacetate monomers and employ enamines that were previously formed. In this case, in order to prevent the enamine from undergoing hydrolysis and reverting to the acetoacetate, the pH during polymerization would have to be maintained in the alkaline range.

### Multifunctional Amines

The multifunctional amines that are employed in this invention as crosslinkers are those which have at least two amine functional groups per molecule.

The amount of multifunctional amine used in this invention should be the amount necessary to perform the cross linking of the acetoacetoxy functional groups in the polymer, that is, 0.1 to 1.0 equivalents per acetoacetate functional groups, preferably 0.5 to 1.0 equivalents of the amine functional group should be employed. Examples of multifunctional amines include hexamethylene diamine, 2-methylheptamethylene diamine, 1,3-diaminopentane, dodecane diamine, 1,2-dichlorohexane diamine, 1,4-diaminocyclohexane, para-phenylene diamine, 3-methyl piperidine, isophorone diamine, bis-hexamethylene triamine, diethylene triamine, or mixtures of the above. Additional multifunctional amines examples include adducts such as ethylene oxide or propylene oxide amine adducts. For example, the Texaco "Jefamine" //sp?// series D, ED, or T may be used.

The preferred multifunctional amines are hexamethylene diamine, 1,2-cyclohexane diamine, or a mixture of them.

Coatings of the resulting paint composition may be applied by any of the conventional methods, for example, brush coating, dipping, paint casting, spraying, etc., to a number of materials such as wood, metal, glass, cloth, leather, paper, plastic, foam, cement, concrete, stone material, marble, terrazzo, and linoleum.

It is also possible to include other commonly used components in the paint composition. Examples include pigments, dyes, emulsifiers, surfactants, thickeners, heat stabilizers, leveling agents, anti-cratering agents, fillers, anti-sedimentation agents, ultra violet light absorbents, antioxidants, and the like.

The present invention will be explained below based on examples, but these examples are merely illustrative and do not, in any way, limit the scope of this invention.

### Example 1

### Preparation of the Monomer Mixture

13.9 g of cationic surfactant were dissolved by stirring into 2059.8 g of deionized water to prepare a solution, and then the following monomers were added slowly to create an emulsified monomer mixture.

| Monomer | Weight (g) |
|---|---|
| 2-ethylhexyl acrylate | 2107.7 |
| styrene | 2555.6 |
| methyl methacrylate | 2666.3 |
| acetoacetoxyethyl methacrylate | 614.6 |
| methacrylic acid | 248.6 |

### Polymerization Operations -- Preparation of the Emulsion Polymers

A solution containing 48.0 g of a cationic surfactant and 5447.1 g of deionized water was added to an appropriate reaction vessel equipped with a thermometer, cooler, and stirrer, and was heated to 45 - 50°C. Then, successive addition was made of a buffer solution (191.6 g of deionized water and 33.5 g of a buffering agent), 1930.5 g of the above described monomer emulsion, and then the temperature was adjusted to 40 - 45°C. Then, addition was made to this reaction vessel, of aqueous iron (II) sulfate solution (85.2 g of deionized water and 0.13 g of iron sulfate), aqueous ammonium persulfate solution (4.8 g of APS dissolved in 47.9 g of deionized water), and aqueous sodium metabisulfite solution (7.2 g of sodium metabisulfite dissolved in 95.8 g of deionized water). Within about 10 minutes, the onset of polymerization was confirmed by a 10-15°C rise in the temperature and the change in appearance of the reaction mixture. When the heat generation had ceased, the remainder of the polymer mixture was gradually added to the reaction vessel along with an aqueous ammonium persulfate (APS) solution (8.2 g of APS and 9.6 g of ammonia water dissolved in 368.8 g of deionized water) and an aqueous solution of sodium metabisulfite (12.5 g of sodium metabisulfite dissolved in 368.8 g of deionized water). The interval over which this addition was made was adjusted so as to prevent the reaction mixture from cooling further (2 to 3 hours). The polymerization reaction temperature was maintained at 59-61°C, with cooling implemented as required to maintain this temperature. After the completion of the additions, 163.8 g of deionized water was added to the reaction vessel to rinse out the supply tubes and the reaction vessel. The reaction vessel was then cooled to 45°C and an aqueous solution of primary amine was added to adjust the pH to 8.5. The resulting emulsified polymer was either cooled to room temperature, or further addition was made of an aqueous solution of 1,6-hexane diamine (133.2 g of 1,6-hexane diamine dissolved in 287.4 g of deionized water).

The molecular weight of the polymer was measured under the following conditions:

| column | Shimpack GPC-80M |
|---|---|
| column temperature | 40°C |
| mobile phase | THF |
| flow rate | 0.5 ml/min. |
| detector | refractometer |
| amount of sample input | 20 microliters |

### Calibration adjustments:

Standard polystyrene products having molecular weights of 1.03 x 10⁶, 5.14 x 10⁵, and 1.56 x 10⁵ were dissolved in THF to a concentration of about 5000 ppm.

### Sample preparation:

The polymer emulsion was dissolved in THF to a concentration of about 3000 ppm, neutralized with dilute sulfuric acid, and passed through a 0.5 micron filter. The resulting molecular weight was 837,000

### Example 2

### Preparation of the Monomer Mixture

19.0 g of cationic surfactant was dissolved in 2008.0 g of deionized water, and then gradual addition was made of the following monomers while stirring to prepare an emulsified monomer mixture.

| **Monomer** | **Weight (g)** |
|---|---|
| 2-ethylhexyl acrylate | 2054.8 |
| styrene | 2491.5 |
| methyl methacrylate | 2599.3 |
| acetoacetoxyethyl methacrylate | 598.9 |
| methacrylic acid | 242.4 |

### Polymerization Operations -- Preparation of the Emulsion Polymers

A solution containing 41.5 g of a cationic surfactant and 5407.9 g of deionized water was added to an appropriate reaction vessel equipped with a thermometer, cooler, and stirrer, and was heated to 80-85°C. Then, successive addition was made of a buffer solution (186.8 g of deionized water and 32.7 g of a buffering agent), 452.5 g of the above described monomer emulsion, and then the temperature was adjusted to 80-82°C. Then, addition was made to this reaction vessel, of an aqueous solution of ammonium persulfate (APS) (16.0 g of APS dissolved in 93.2 g of deionized water). Within about 5 minutes, the onset of polymerization was confirmed by a 3-5°C temperature rise and a change in the appearance of the reaction mixture. When the heat generation had stopped, gradual addition was made of the remainder of the monomer mixture along with an aqueous solution of ammonium persulfate (APS) (8.0 g of APS and 9.3 g of ammonia water dissolved in 718.7 g of deionized water) over a period of time to account for the heat lost to cooling (2 - 3 hours). Cooling was implemented as needed to maintain the reaction temperature at 80-82°C. After the completion ofthe addition, 159.7 g of deionized water was used to rinse the supply tubes and the vessel as it was added to the reaction vessel. Then, the reaction vessel was cooled to 45°C and an aqueous solution of primary amine was added to adjust the pH to 8.5. The resulting emulsion polymer was either cooled to room temperature, or further addition was made of an aqueous solution of 1,6-hexane diamine (129.8 g of 1,6-hexane diamine dissolved in 280.2 g of deionized water).

When the molecular weight was measured under the same conditions as in Example 1, it was found to be 270,000.

### Comparative Example 1

### Preparation of the Monomer Mixture

The emulsified monomer mixture was prepared by dissolving 19.0 g of cationic surfactant into 2008.0 g of deionized water, followed by the gradual addition of the following monomers while stirring:

| **Monomer** | **Weight (g)** |
|---|---|
| 2-ethylhexyl acrylate | 2054.8 |
| styrene | 2491.5 |
| methyl methacrylate | 2599.3 |
| acetoacetoxyethyl methacrylate | 599.9 |
| methacrylic acid | 242.4 |
| n-dodecyl mercaptan | 159.7 |

### Polymerization Operations -- Preparation of the Emulsion Polymers

A solution containing 41.5 g of a cationic surfactant and 5407.9 g of deionized water was added to an appropriate reaction vessel equipped with a thermometer, cooler, and stirrer, and was heated to 80-85°C. Then, successive addition was made of a buffer solution (186.8 g of deionized water and 32.7 g of a buffering agent), 452.5 g of the above described monomer emulsion, and then the temperature was adjusted to 80-82°C. Then, addition was made to this reaction vessel, of an aqueous solution of ammonium persulfate (APS) (16.0 g of APS dissolved in 93.2 g of deionized water). Within about 5 minutes, the onset of polymerization was confirmed by a 3-5°C temperature rise and a change in the appearance of the reaction mixture. When the heat generation had stopped, gradual addition was made of the remainder of the monomer mixture along with an aqueous solution of ammonium persulfate (APS) (8.0 g of APS and 9.3 g of ammonia water dissolved in 718.7 g of deionized water) over a period of time to account for the heat lost to cooling (2 - 3 hours). Cooling was implemented as needed to maintain the reaction temperature at 80-82°C. After the completion of the addition, 159.7 g of deionized water was used to rinse the supply tubes and the vessel as it was added to the reaction vessel. Then, the reaction vessel was cooled to 45°C and an aqueous solution of primary amine was added to adjust the pH to 8.5. The resulting emulsion polymer was either cooled to room temperature, or further addition was made of an aqueous solution of 1,6-hexane diamine (129.8 g of 1,6-hexane diamine dissolved in 280.2 g of deionized water).

When the molecular weight was measured under the same conditions as in Example 1, it was found to be 20,000.

### Comparative Example 2

The operations of Comparative Example 1 were repeated but with using 55.9 g of dodecyl mercaptan.

When the molecular weight was measured under the same conditions as in Example 1, it was found to be 50,000.

### Evaluation Methods and Results

Paint was prepared with the following formulation

| Grind Components | Parts by weight |
|---|---|
| methyl carbitol | 4.46 |
| Orotan //sp?// 731 (25%) | 0.97 |
| Triton CF-10 | 0.24 |
| Fomaster //sp?// AP | 0.17 |
| titanium dioxide | 24.29 |

| Let Out Components | Parts by weight |
|---|---|
| water | 4.67 |
| emulsion | 59.02 |
| Texanol | 5.61 |
| Acrizol RM-8 (3.5%) | 0.57 |
| **Notes:** Orotan 731: a dispersant (made by Rohm and Haas Company) Triton: a wetting agent (made by Union Carbide) Texanol: a film forming aid Acrizol RM-8: a thickener made by Rohm and Haas Company) | |

The resulting paints were applied to plate glass to a 6 mil film thickness and then dried at room temperature for 3 days.

The film forming properties were determined by observing the film and evaluating the paint film surface for cracking or any dramatic lowering of gloss.

### Rubbing Test

The film was rubbed 20 times with an ethanol saturated piece of cheese cloth and then the surface condition was visually examined.

### Xylene Spot Test

Xylene was dripped on the film surface and then wiped off after 1 minute, followed by observing the surface with the naked eye.

The results were as follows

**Table 1**

| Example No. of emulsion used | Presence or absence of diamine | Film forming properties | Ethanol rubbing test | Xylene spot test |
|---|---|---|---|---|
| Example 1 | none | good | fair-good | poor |
| Example 1 | present | good | good | good |
| Example 2 | none | good | fair-good | poor |
| Example 2 | present | good | good | good |
| Comp. Ex. 1 | none | good | poor | poor |
| Comp. Ex. 1 | present | good | poor | poor |
| Comp. Ex. 2 | none | good | poor | poor |
| Comp. Ex. 2 | present | good | poor | poor |

## Claims

1. Aqueous coating compositions containing acetoacetate functional polymers with a weight-averaged molecular weight of 100,000 or greater and which contain acetoacetate functional groups and acidic functional groups, and multifunctional amine.

2. The composition according to Claim 1 wherein the weight-averaged molecular weight of the acetoacetate functional polymer is 200,000 or greater.

3. The composition according to Claim 1 wherein the multifunctional amine is at least one type of amine selected from the group comprised of multifunctional hexamethylene diamine and 1,2-cyclohexane diamine.

4. The composition according to Claim 1 wherein the equivalents ratio between the acetoacetate multifunctional polymer's acetoacetate functional group and the multifunctional amine ranges from 1 : 1 to 1 : 0.5.
